# FASCICULE DE BREVET EUROPEEN

(11) **EP 3 544 893 B1**
(45) Date de publication et mention de la délivrance du brevet: **03.03.2021**
(21) Numéro de dépôt: 17804860.9
(22) Date de dépôt: 21.11.2017
(51) Int. Cl.: B64C 13/34, B64C 13/38

(54) **ACTIONNEUR À MONTAGE FACILITÉ**
LEICHT ZU MONTIERENDER AKTUATOR
EASY-TO-MOUNT ACTUATOR

(30) Priorité: 22.11.2016 FR 1661371
(43) Date de publication de la demande: 02.10.2019
(73) Titulaire: Safran Electronics & Defense, 75015 Paris (FR)
(72) Inventeur: MERCIER, Guillaume, 75015 Paris (FR); MEHEZ, Jérôme, 75015 Paris (FR); BEZIVIN, Philippe, 75015 Paris (FR)
(74) Mandataire: Lavialle, Bruno François Stéphane
(86) Numéro de dépôt international: PCT/EP2017/079978
(87) Numéro de publication internationale: WO 2018/095934

(56) Documents cités:
- EP-A2- 0 873 937
- EP-A2- 2 371 709
- WO-A1-2009/135653
- WO-A2-2009/118547
- WO-A2-2013/007987
- GB-A- 2 277 305

## Description

La présente invention concerne le domaine de l'aéronautique et plus particulièrement l'actionnement des surfaces de vol mobiles d'un aéronef, telles que les ailerons, les gouvernes, les volets, les becs, les gouvernes de profondeurs...

Les surfaces mobiles de vol sont articulées à la structure de l'aéronef pour être mobiles entre deux positions extrêmes et sont déplacées entre ces deux positions par des organes d'actionnement ayant un pignon d'entrée relié à une ligne de transmission reliant les organes d'actionnement entre eux et à un moteur commun commandé par une unité de pilotage de l'aéronef. La ligne de transmission comprend des arbres accouplés les uns aux autres via des tronçons cannelés. Cette solution est relativement complexe en particulier parce qu'il est nécessaire de caler angulairement les arbres entre eux pour assurer une synchronisation des organes d'actionnement agissant sur une même surface mobile de vol. Or, le système d'actionnement est ainsi agencé que l'actionnement des surfaces mobiles de vol entre leurs positions extrêmes demande que les arbres fassent plus d'un tour: à une même position angulaire des arbres peuvent donc correspondre plusieurs positions des surfaces mobiles de vol. Ceci complique grandement le montage initial et les opérations ultérieures de maintenance du système d'actionnement.

Il a été également envisagé d'associer au moins un actionneur à chaque surface mobile de vol et de relier tous les actionneurs à l'unité de pilotage. Par actionneur, on entend un moteur ayant un stator fixé à la structure de l'aéronef et un rotor relié par une ligne de transmission de mouvement à un organe d'actionnement relié à la surface mobile de vol pour exercer sur celle-ci un effort permettant son déplacement. Il en résulte un poids relativement important de l'ensemble du système d'actionnement.

De plus, compte-tenu de la taille des surfaces mobiles de vol et des contraintes qu'elles subissent, il est généralement prévu au moins deux actionneurs par surface mobile de vol, ce qui augmente d'autant plus le poids de l'ensemble du système d'actionnement et il est nécessaire là encore de caler angulairement entre eux les actionneurs agissant sur une même surface de vol. Le document WO 2009/118547 A2 divulgue un actionneur pour une surface de vol d'un aéronef.

Un but de l'invention est de simplifier le système d'actionnement des surfaces mobiles de vol d'un aéronef.

A cet effet, on prévoit, selon l'invention, un actionneur pour surface mobile de vol, comprenant au moins deux organes d'actionnement de la surface mobile de vol entre deux positions extrêmes et un moteur relié aux organes d'actionnement par au moins une ligne de transmission de mouvement rotatif. Chaque organe d'actionnement comprend un pignon et l'actionneur est agencé pour que la ligne de transmission ait une amplitude angulaire de moins d'un tour lors du déplacement de la surface mobile de vol entre ses deux positions et la ligne de transmission de mouvement est agencée pour autoriser une position angulaire unique entre les pignons des organes d'actionnement.

Ainsi, l'amplitude angulaire de moins d'un tour et l'agencement de la ligne de transmission pour n'autoriser qu'une position angulaire unique entre les pignons d'entrée facilitent le montage et la maintenance de l'actionneur.

D'autres caractéristiques et avantages de l'invention ressortiront à la lecture de la description qui suit de modes de réalisation particuliers non limitatifs de l'invention.

Il sera fait référence aux dessins annexés, parmi lesquels :

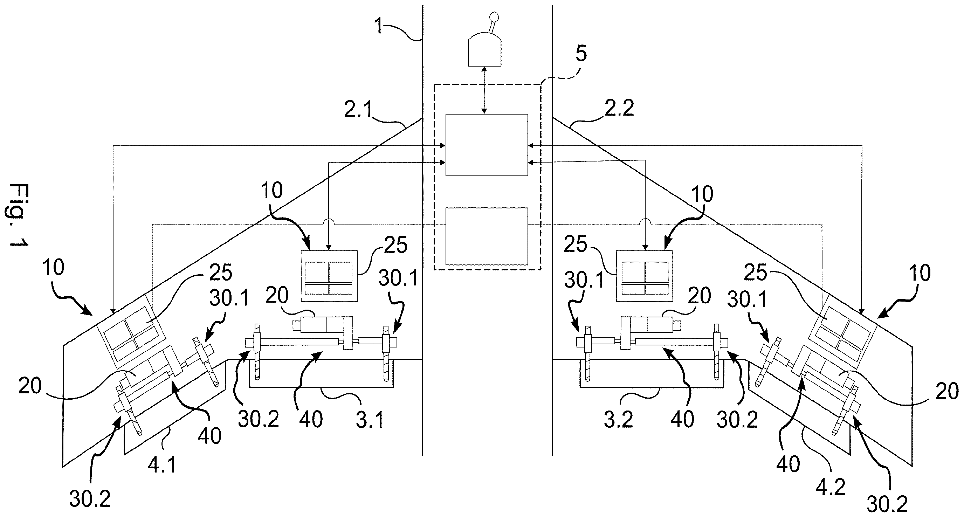

- la figure 1 est une vue schématique partielle de dessus d'un aéronef selon l'invention ;
- la figure 2 est un schéma cinématique d'un des actionneurs de cet aéronef, selon un premier mode de réalisation de l'invention ;
- la figure 3 est un schéma cinématique d'un des actionneurs de cet aéronef, selon un deuxième mode de réalisation de l'invention.

En référence aux figures, l'invention est ici décrite en application à un aéronef comprenant un fuselage 1 et deux ailes 2.1, 2.2 pourvue chacune d'un volet interne 3.1, 3.2 et d'un volet externe 4.1, 4.2. De manière connue en elle-même, les volets 3.1, 3.2, 4.1, 4.2 sont montés sur les ailes 2.1, 2.2 pour pivoter entre deux positions extrêmes et sont déplacés entre ses deux positions par un système d'actionnement commandés par une unité de pilotage 5 de l'aéronef. L'unité de pilotage 5 est un ensemble de calculateurs qui sont reliés aux instruments de commande du poste de pilotage et à des capteurs répartis dans l'aéronef et qui commande les moteurs et surfaces mobiles de vol de l'aéronef en fonction des actions exercées par le pilote sur les instruments de commande.

Le système d'actionnement comprend ici un actionneur par volet 3.1, 3.2, 4.1, 4.2.

Chaque actionneur, généralement désigné en 10, comprend un bâti 11 portant un moteur unique 20 entraînant au moins deux organes 30.1, 30.2 d'actionnement du volet 3.1, 3.2, 4.1, 4.2 entre ses deux positions extrêmes.

Le moteur 20 est un moteur électrique rotatif ayant une partie rotative coopérant avec :
- un résolveur 23 permettant de détecter la position angulaire de ladite partie rotative par rapport à une position de référence prédéterminée,
- un frein 24 agencé pour bloquer en rotation ladite partie rotative.

Le résolveur 23 et le frein 24 sont reliés à un module de commande 25 relié à l'unité de pilotage 5 pour être commandé par celle-ci. Le module de commande 25 comprend un circuit électronique de commande et un circuit électronique de puissance qui sont connus en euxmêmes, le circuit électronique de puissance étant piloté par le circuit électronique de commande relié à l'unité de pilotage 5.

La partie rotative du moteur 20 comprend un arbre de sortie 21 relié, par un train d'engrenages 22 formant un réducteur, à un pignon 31.1 de l'organe d'actionnement 30.1. Le pignon 31.1 est solidaire d'un arbre 32.1 monté pour pivoter sur le bâti 11 et engrène sur un secteur denté 33.1 monté pour pivoter sur le bâti 11 tout en étant solidaire du volet 3.1, 3.2, 4.1, 4.2 de telle manière que lorsque le secteur denté 33.1 est entraîné en rotation, il entraîne avec lui le volet 3.1, 3.2, 4.1, 4.2 en pivotement. Sur l'arbre 32.1 est également montée une roue à rochets 34.1 qui coopère avec un cliquet 35.1 commandé par un solénoïde 36.1 entre une position de libération dans laquelle le cliquet 35.1 est dégagé de la roue à rochets 34.1 permettant une libre rotation de l'arbre 32.1 dans les deux sens de rotation et une position d'engagement du cliquet 35.1 avec la roue à rochets 36.1 n'autorisant qu'un seul sens de rotation de l'arbre 32.1. Le solénoïde 36.1 est relié au module de commande 25 pour être commandé par celui-ci. L'organe d'actionnement 30.1 comprend un résolveur 37.1 qui est monté sur le châssis 11 pour détecter la position angulaire de l'arbre 32.1 et qui est relié au module de pilotage 25 pour lui fournir cette position angulaire.

L'organe d'actionnement 30.2 comprend lui aussi un pignon 31.2 qui est solidaire d'un arbre 32.2 monté pour pivoter sur le bâti 11 et qui engrène sur un secteur denté 33.2 monté pour pivoter sur le bâti 11 tout en étant solidaire du volet 3.1, 3.2, 4.1, 4.2 de telle manière que lorsque le secteur denté 33.2 est entraîné en rotation, il entraîne avec lui le volet 3.1, 3.2, 4.1, 4.2 en pivotement. Sur l'arbre 32.2 est également montée une roue à rochets 34.2 qui coopère avec un cliquet 35.2 commandé par un solénoïde 36.2 entre une position de libération dans laquelle le cliquet 35.2 est dégagé de la roue à rochets 34.2 permettant une libre rotation de l'arbre 32.2 dans les deux sens de rotation et une position d'engagement du cliquet 35.2 avec la roue à rochets 34.2 n'autorisant qu'un seul sens de rotation de l'arbre 32.2. Le solénoïde 36.2 est relié au module de pilotage 25 pour être commandé par celui-ci. L'organe d'actionnement 30.2 comprend un résolveur 37.2 qui est monté sur le châssis 11 pour détecter la position angulaire de l'arbre 32.2 et qui est relié au module de pilotage 25 pour lui fournir cette position angulaire.

L'arbre 32.1 a une extrémité liée en rotation par un joint de Cardan 41.1 à une extrémité d'un arbre 42.1 d'une ligne de transmission de mouvement 40. L'arbre 32.2 a une extrémité liée en rotation par un joint de Cardan 41.2 à une extrémité d'un arbre 42.2 de la ligne de transmission de mouvement 40. L'arbre 42.1 a une extrémité opposée reliée de façon amovible, par un accouplement 43, à une extrémité de l'arbre 42.2 opposée au joint de Cardan 41.2. L'accouplement 43 assure une liaison indexée en rotation entre les arbres 42.1, 42.2. Par liaison indexée en rotation, on entend une liaison qui n'autorise au montage qu'une seule position angulaire relative des arbres 42.1 et 42.2. La liaison est en outre ici une liaison glissière amovible qui permet, d'une part, d'éviter l'apparition de contraintes engendrées par des déformations de l'aile et, d'autre part, un accouplement et un désaccouplement aisé des arbres 42.1, 42.2. Une telle liaison est par exemple obtenue par un clavetage. La ligne de transmission de mouvement 40 est ainsi agencée pour autoriser une position angulaire unique entre les pignons 31.1 et 31.2.

L'actionneur est agencé pour que la ligne de transmission 40 ait une amplitude angulaire de moins d'un tour lors du déplacement du volet 3.1, 3.2, 4.1, 4.2 entre ses deux positions extrêmes. Ceci est obtenu à partir des rapports de réduction existant entre les engrenages du train d'engrenages 22, entre le pignon de sortie du train d'engrenages 22 et le pignon 31.1, et entre le pignon 31.1, 31.2 et le secteur denté 33.1, 33.2.

On comprend que cet agencement facilite le raccordement entre eux des organes d'actionnement 30.1, 30.2 de chaque actionneur 10 puisqu'il n'existe qu'une seule position angulaire relative des arbres 32.1, 32.2 entre eux.

On prévoit de préférence un organe d'écrêtage d'inertie dans le train d'engrenages 22 de manière à empêcher que l'énergie cinétique emmagasinée dans le moteur puisse conduire à une détérioration de la structure de l'aéronef en cas de blocage de la ligne de transmission. Cet organe est par exemple un limiteur de couple tel qu'un limiteur à friction monté sur la ligne de transmission au voisinage du moteur.

L'unité de pilotage 5 est agencée pour pouvoir commander les volets de manière indépendante.

L'invention permet une synchronisation mécanique entre les organes d'actionnement 30.1, 30.2 d'un même volet du fait de la ligne de transmission 40 et une synchronisation électrique, via l'unité de pilotage 5, entre les actionneurs 10 d'une même aile ou des deux ailes grâce aux résolveurs 37.1 et 37.2 qui renvoient la position angulaire de chaque actionneur.

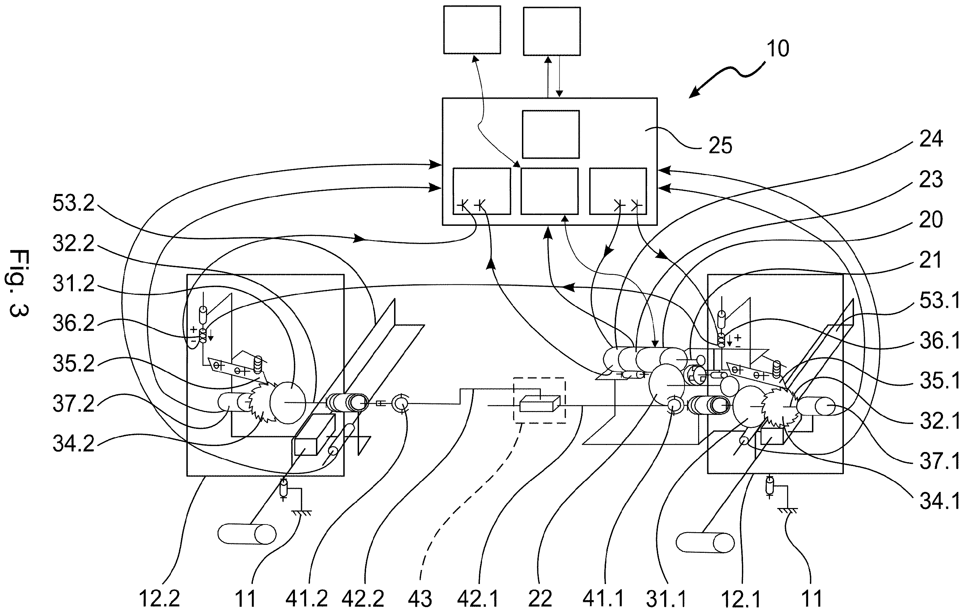

Les éléments identiques ou analogues à ceux précédemment décrits porteront une référence numérique identique à ces derniers dans la description qui suit du deuxième mode de réalisation et sur la figure 3 correspondante.

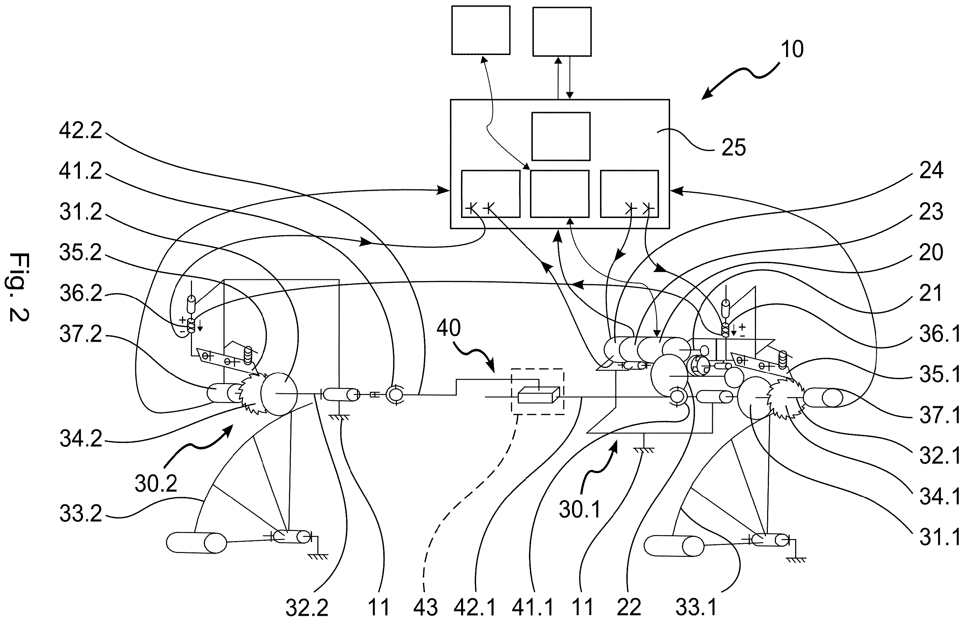

Le mode de réalisation de la figure 3 est identique à celui de la figure 2 sauf en ce que le pignon 31.1, 31.2 de chaque organe d'actionnement 30.1, 30.2 engrène avec une crémaillère 53.1, 53.2 au lieu du secteur denté 33.1, 33.2. La crémaillère 53.1, 53.2 est montée pour coulisser selon une direction perpendiculaire à l'axe de pivotement du volet 3.1, 3.2, 4.1, 4.2 et a une extrémité articulée à un levier solidaire dudit volet. Chaque crémaillère 53.1, 53.2 est en outre associée à un capteur de position ici de type LVDT.

En outre, chaque organe d'actionnement 30.1, 30.2 est ici monté sur un bâti intermédiaire 12.1, 12.2 monté sur le bâti 11 pour pivoter autour d'un axe perpendiculaire à l'axe de pivotement du volet 3.1, 3.2, 4.1, 4.2 et perpendiculaire à la direction de coulissement de la crémaillère 53.1, 53.2 de manière à former un joint de Cardan permettant une libre orientation des crémaillères 53.1, 53.2 lorsque celles-ci exercent un effort sur les volets.

Le fonctionnement de l'actionneur 10 selon le deuxième mode de réalisation est pour le reste identique à celui du premier mode de réalisation.

Bien entendu, l'invention n'est pas limitée aux modes de réalisation décrits mais englobe toute variante couverte par la définition de l'invention figurant dans les revendications.

En particulier, l'invention est applicable à l'actionnement de toute surface mobile de vol et par exemple les ailerons, les gouvernes, les volets, les becs, les gouvernes de profondeurs...

Les calculateurs de l'unité de pilotage 5 peuvent être centralisés ou répartis entre une unité centrale située au voisinage du poste de pilotage de l'aéronef pour centraliser le traitement des instructions de pilotage issues du poste de pilotage et des unités dédiées reliées à l'unité centrale et disposées au plus près des actionneurs 10 pour piloter ceux-ci en fonction de commandes établies par l'unité centrale à partir des instructions de pilotage.

Les crémaillères peuvent être remplacées par des vis à billes.

L'accouplement 43 peut résulter d'un goupillage, d'un agencement de cannelures non symétrique autour de l'axe de rotation des arbres 42.1, 42.2, ou autre.

La ligne de transmission 40 peut être reliée aux pignons 31.1, 31.2 sans passer par des joints de Cardan.

Le pignon 31.1, 31.2 peut ne pas engrener sur le secteur denté ou la crémaillère, l'arbre 32.1, 32.2 portant un autre pignon à cette fin.

Les cliquets sont facultatifs ou peuvent être montés différemment. Par exemple, les cliquets peuvent agir sur le secteur denté ou la crémaillère. Les cliquets peuvent être remplacés par des verrous.

Les résolveurs peuvent être remplacés par tout type de capteur angulaire de position.

## Revendications

1. Actionneur (10) pour au moins une surface mobile de vol (3.1, 3.2, 4.1, 4.2) d'un aéronef, comprenant au moins deux organes d'actionnement (30.1, 30.2) de la surface mobile de vol entre deux positions extrêmes et un moteur (20) relié aux organes d'actionnement par au moins une ligne de transmission de mouvement rotatif, chaque organe d'actionnement comprend un pignon d'entraînement (31.1, 31.2) et la ligne de transmission de mouvement est agencé pour autoriser une position angulaire unique entre les pignons d'entraînement de l'organe d'actionneur; **caractérisé en ce que** l'actionneur est agencé pour que la ligne de transmission ait une amplitude angulaire de moins d'un tour lors du déplacement de la surface mobile de vol entre ses deux position extrêmes.

2. Actionneur selon la revendication 1, dans lequel la ligne de transmission (40) comprend deux tronçons d'arbre (42.1, 42.2) liés en rotation de manière amovible par un accouplement autorisant une position angulaire unique des tronçons d'arbre entre eux.

3. Actionneur selon la revendication 1, dans lequel la ligne de transmission (40) est reliée à l'élément d'entrée de chaque organe d'actionnement par un cardan (41.1, 41.2).

4. Actionneur selon la revendication 1, dans lequel l'organe d'actionnement comprend un secteur denté (33.1, 33.2) lié en rotation au pignon d'entraînement (31.1, 31.2) et solidaire, en usage, de la surface mobile de vol.

5. Actionneur selon la revendication 1, dans lequel le pignon d'entrée (31.1, 31.2) de chaque organe d'actionnement engrène, en usage, avec une crémaillère (53.1, 53.2) qui est fixée à une structure de l'aéronef pour coulisser et qui est articulée, en usage, un levier solidaire de la surface mobile de vol.

6. Actionneur selon la revendication 1, dans lequel chaque organe d'actionnement comprend un capteur angulaire (37.1, 37.2) lié en rotation au pignon d'entraînement (31.1, 31.2).

7. Actionneur selon la revendication 1, dans lequel le moteur (20) est associé à un capteur angulaire (23) et à un frein (24) qui sont tous deux reliés au module de commande (25).

8. Aéronef comprenant des ailes (2.1, 2.2) pourvues chacune d'au moins un volet (3.1, 3.2, 4.1, 4.2), chaque volet étant associé à un actionneur (10) selon l'une quelconque des revendications précédentes et les actionneurs étant reliés à une unité de pilotage (5) de l'aéronef.

9. Aéronef selon la revendication 8, dans lequel chaque aile (2.1, 2.2) est pourvue d'un volet intérieur (3.1, 3.2) et d'un volet extérieur (4.1, 4.2), et l'unité de pilotage (5) est agencée pour pouvoir commander les volets indépendamment les uns des autres.

## Patentansprüche

1. Aktor (10) für mindestens eine bewegliche Flugsteuerfläche (3.1, 3.2, 4.1, 4.2) eines Luftfahrzeugs, umfassend mindestens zwei Betätigungsorgane (30.1, 30.2) zur Betätigung der beweglichen Flugsteuerfläche zwischen zwei Endpositionen und einen Motor (20), der mit den Betätigungsorganen über mindestens eine Übertragungsleitung zur Übertragung einer Drehbewegung verbunden ist, wobei jedes Betätigungsorgan ein Antriebsritzel (31.1., 31.2) umfasst und wobei die Bewegungsübertragungsleitung so ausgebildet ist, dass sie eine einzige Winkelposition zwischen den Antriebsritzeln des Betätigungsorgans gestattet; **dadurch gekennzeichnet, dass** der Aktor so ausgebildet ist, dass die Übertragungsleitung eine Winkelamplitude von weniger als einer Umdrehung während der Bewegung der beweglichen Flugsteuerfläche zwischen ihren beiden Endpositionen hat.

2. Aktor nach Anspruch 1, bei dem die Übertragungsleitung (40) zwei Wellenabschnitte (42.1, 42.2) umfasst, die auf lösbare Weise über eine Kopplung, die eine einzige Winkelposition der Wellenabschnitte zueinander gestattet, in Drehung verbunden sind.

3. Aktor nach Anspruch 1, bei dem die Übertragungsleitung (40) mit dem Eingangselement jedes Betätigungsorgans über ein Kardangelenk (41.1, 41.2) verbunden ist.

4. Aktor nach Anspruch 1, bei dem das Betätigungsorgan einen Zahnsektor (33.1, 33.2) umfasst, der mit dem Antriebsritzel (31.1, 31.2) in Drehung verbunden und im Gebrauch fest mit der beweglichen Flugsteuerfläche verbunden ist.

5. Aktor nach Anspruch 1, bei dem das Eingangsritzel (31.1, 31.2) jedes Betätigungsorgans im Gebrauch mit einer Zahnstange (53.1, 53.2) in Eingriff steht, die an einer Struktur des Luftfahrzeugs verschiebbar befestigt ist und die im Gebrauch an einem fest mit der beweglichen Flugsteuerfläche verbundenen Hebel angelenkt ist.

6. Aktor nach Anspruch 1, bei dem jedes Betätigungsorgan einen Winkelsensor (37.1, 37.2) umfasst, der mit dem Antriebsritzel (31.1, 31.2) in Drehung verbunden ist.

7. Aktor nach Anspruch 1, bei dem der Motor (20) mit einem Winkelsensor (23) und mit einer Bremse (24) verbunden ist, die beide mit dem Steuermodul (25) verbunden sind.

8. Luftfahrzeug, umfassend Flügel (2.1, 2.2), die jeweils mit mindestens einer Klappe (3.1, 3.2, 4.1, 4.2) versehen sind, wobei jede Klappe mit einem Aktor (10) nach einem der vorhergehenden Ansprüche verbunden ist und die Aktoren mit einer Steuereinheit (5) des Luftfahrzeugs verbunden sind.

9. Luftfahrzeug nach Anspruch 8, bei dem jeder Flügel (2.1, 2.2) mit einer inneren Klappe (3.1, 3.2) und mit einer äußeren Klappe (4.1, 4.2) versehen ist, und die Steuereinheit (5) so ausgebildet ist, dass sie die Klappen unabhängig voneinander steuern kann.

## Claims

1. An actuator (10) for at least one flight control surface (3.1, 3.2, 4.1, 4.2) of an aircraft, the actuator comprising at least two actuator members (30.1, 30.2) for actuating the flight control surface between two extreme positions and a motor (20) connected to the actuator members by at least one rotary motion transmission line, each actuator member comprising a drive pinion (31.1, 31.2), and the motion transmission line is arranged to allow only one angular position between the drive pinions and the actuator member; **characterized in that** the actuator is arranged so that the transmission line has an angular amplitude of less than one revolution during movement of the flight control surface between its two extreme positions.

2. An actuator according to claim 1, wherein the transmission line (40) has two shaft segments (42.1, 42.2) that are releasably connected to rotate together by a coupling that allows only one angular position between the shaft segments.

3. An actuator according to claim 1, wherein the transmission line (40) is connected to the inlet element of each actuator member via a universal joint (41.1, 41.2) .

4. An actuator according to claim 1, wherein the actuator member comprises a toothed sector (33.1, 33.2) connected in rotation with the drive pinion (31.1, 31.2) and secured, in use, to the flight control surface.

5. An actuator according to claim 1, wherein the inlet pinion (31.1, 31.2) of each actuator member meshes, in use, with a rack (53.1, 53.2) that is slidably fastened to a structure of the aircraft and that is hinged, in use, to a lever secured to the flight control surface.

6. An actuator according to claim 1, wherein each actuator member includes an angle sensor (37.1, 37.2) connected in rotation with the drive pinion (31.1, 31.2).

7. An actuator according to claim 1, wherein the motor (20) is associated with an angle sensor (23) and with a brake (24), both of which are connected to the control module (25).

8. An aircraft having wings (2.1, 2.2) each provided with at least one flap (3.1, 3.2, 4.1, 4.2), each flap being associated with an actuator (10) according to any preceding claim, and the actuators being connected to a control unit (5) of the aircraft.

9. An aircraft according to claim 8, wherein each wing (2.1, 2.2) is provided with an inner flap (3.1, 3.2) and with an outer flap (4.1, 4.2), and the control unit (5) is arranged to be capable of controlling the flaps independently of each other.
